# FASCICULE DE BREVET EUROPEEN

(11) **EP 3 692 247 B1**
(45) Date de publication et mention de la délivrance du brevet: **27.10.2021**
(21) Numéro de dépôt: 18783069.0
(22) Date de dépôt: 24.09.2018
(51) Int. Cl.: F01D 5/02, F01D 5/06, F01D 25/28, F04D 29/64

(54) **DISPOSITIF POUR L'ASSEMBLAGE D'UNE TURBOMACHINE, ET PROCÉDÉ UTILISANT LE DISPOSITIF**
VORRICHTUNG ZUM ZUSAMMENBAU EINES TURBINENTRIEBWERKS UND VERFAHREN UNTER VERWENDUNG DER VORRICHTUNG
DEVICE FOR ASSEMBLING A TURBINE ENGINE, AND METHOD USING THE DEVICE

(30) Priorité: 06.10.2017 FR 1759371
(43) Date de publication de la demande: 12.08.2020
(73) Titulaire: Safran Aircraft Engines, 75015 Paris (FR)
(72) Inventeur: GASTAL, Thierry Fernand, 77550 Moissy-Cramayel (FR); CREUSET, Morgan Bryan Antony, 77550 Moissy-Cramayel (FR); PETIT, Eric Louis Charles, 77550 Moissy-Cramayel (FR)
(74) Mandataire: Gevers & Orès
(86) Numéro de dépôt international: PCT/FR2018/052328
(87) Numéro de publication internationale: WO 2019/068985

(56) Documents cités:
- EP-A1- 1 655 457
- EP-A1- 1 757 777
- EP-A2- 1 752 409
- FR-A1- 3 016 337
- US-A1- 2009 288 291

## Description

### Domaine de l'invention:

La présente invention concerne le domaine des turbomachines et vise en particulier les moteurs à turbine à gaz multi-corps. Elle se rapporte aux opérations d'assemblage des moteurs et en particulier au montage du module de turbine basse pression sur un corps haute pression.

### Etat de la technique :

L'état de la technique comprend notamment les documents US-A1-2009/288291 et EP-A1-1 757 777.

Un turboréacteur à double corps, avec une soufflante avant par exemple, comprend un corps haute pression, dit corps HP, et un corps basse pression, dit corps BP. Le corps BP, en aval du corps HP, tourne à une première vitesse et comprend une turbine basse pression qui entraîne la soufflante avant. Dans ce document, l'amont et l'aval, respectivement l'avant et l'arrière, sont définis par rapport au sens général de l'écoulement des gaz dans le turboréacteur. Le corps HP tourne à une vitesse différente de celle de la turbine basse pression. Les arbres des deux corps sont concentriques et l'arbre du corps BP traverse par l'intérieur l'arbre du corps HP. L'arbre du corps BP est guidé en rotation par des paliers supportés par la structure fixe du moteur, situés respectivement en arrière de la turbine et devant le compresseur haute pression. L'arbre du corps HP est guidé en rotation par des paliers supportés par la structure fixe du moteur. Dans le type de turboréacteur concerné par l'invention, il n'y a pas de palier à l'arrière du corps HP reliant l'arbre du corps HP et l'arbre du corps BP. L'arbre du corps BP traverse donc librement le corps HP vers l'avant jusqu'à ce qu'il soit maintenu par les paliers amont.

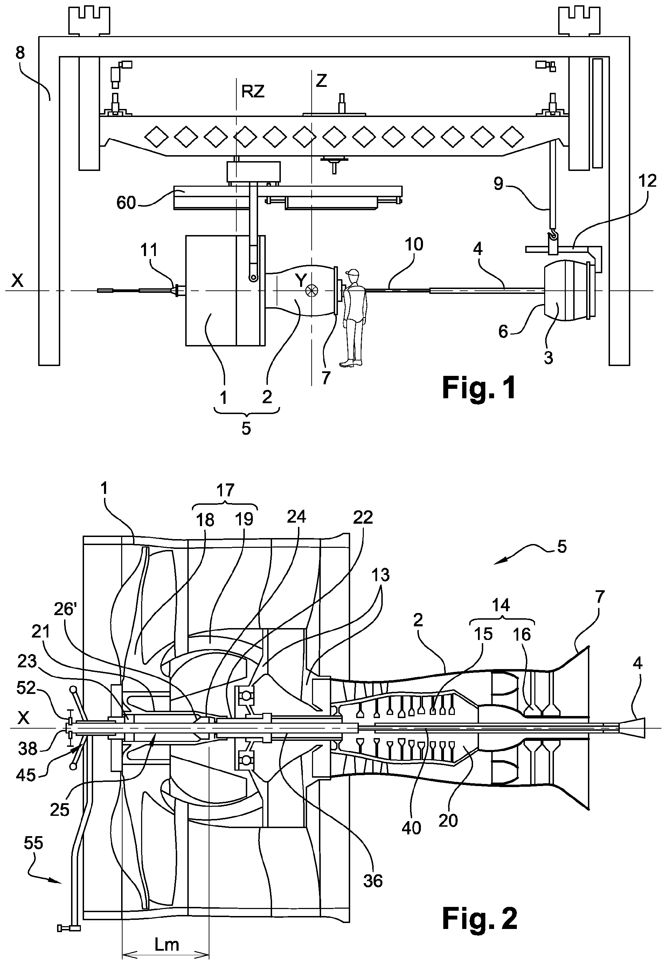

La figure 1 montre une turbomachine de ce type en cours de montage. Il s'agit ici d'un turboréacteur double flux et double corps, comprenant un corps de soufflante avant 1, un corps HP 2 avec son arbre, non visible sur la figure 1, et le module BP 3, avec son arbre 4, dit arbre BP. Le corps de soufflante avant 1 et le corps HP 2 sont déjà assemblés et forment un module 5, dit premier module. Sur la figure, on est en train de réaliser l'accostage du module BP 3 sur le premier module 5.

Par le terme accostage, on désigne ici tout ou partie du déplacement en translation, le long de l'axe longitudinal X du premier module 5, du module BP 3 jusqu'à ce que la bride 6 du carter externe de celui-ci vienne en contact avec la bride 7 correspondante du corps HP 2.

Lors de l'opération d'accostage, l'arbre BP 4 doit traverser le corps HP 2 sans contact, avec typiquement un jeu minimum de 0,5 mm au niveau de l'arbre, pour garantir que le revêtement anticorrosion de l'arbre BP ou de l'intérieur du premier module ne soit détérioré, et un jeu de 0,08 mm au niveau des labyrinthes. Les labyrinthes, non représentés sur la figure 1, sont des dispositifs d'étanchéité placés entre le corps HP 2 et le corps BP 3, comportant chacun un élément tournant avec l'arbre du corps HP et un élément tournant avec l'arbre BP. Ces éléments s'assemblent lors de l'accostage, lorsque les brides 6 et 7 du corps HP 2 et du corps BP 3 sont en contact.

Sur l'exemple de la figure 1, l'accostage est réalisé à l'horizontale. Le premier module 5 est suspendu à un portique 8 par l'intermédiaire d'une balancelle 60 de manière à ce que son axe longitudinal X soit horizontal. Il peut aussi être maintenu par un chariot ou un piédestal.

Le module BP 3, fixé à un palonnier 12, est déplacé le long de l'axe longitudinal X au moyen d'un palan 9 fixé de manière mobile au portique 8, pour traverser le premier module 5 jusqu'au contact des deux brides 6 et 7.

De manière connue, un guide arbre 10 est fixé en extrémité de l'arbre BP 4 de façon à le prolonger vers l'avant. Ce guide arbre 10 est plus fin que l'arbre BP 4 et peut progresser à l'intérieur du premier module 5 jusqu'à atteindre un centreur 11 placé à l'avant du premier module 5. Une fois dans le centreur 11, le guide arbre 10 peut guider la progression de l'arbre BP 4 le long de l'axe longitudinal X.

Au cours de la progression du guide arbre 10 et de l'arbre BP 4 jusqu'à l'accouplage des brides 6 et 7, il est nécessaire d'assurer la précision du guidage pour que des contacts de ces éléments avec ceux d'une pièce interne du premier module 5 n'entraînent pas la dégradation de la peinture du revêtement assurant la non corrosion du matériau des pièces ou de l'arbre, ou que des labyrinthes ne soient pas détériorés, ou que des contraintes trop fortes ne soient appliquées.

Cependant, le module BP 3 est lourd (typiquement 1200kg) et le risque de balancement et de désalignement de l'arbre BP 4 lors de l'accostage est majeur.

Chaque impulsion du palan 9 provoque un déplacement non contrôlé du module BP 3 par un effet de balançoire. Il y a également un risque de désalignement dans l'axe vertical RZ (liaison entre le portique 8 et la balancelle 60) par le jeu mécanique de la balancelle 60 soutenant le module 5 et un risque de désalignement dans l'axe horizontal transverse Y, par le jeu entre des broches de maintien du module 5 et la balancelle 60.

Cela amène à utiliser, pour effectuer le centrage, des dispositifs assez lourds et des procédures longues comprenant de nombreuses manipulations pour rectifier régulièrement l'alignement des modules 5 et 3.

Il existe donc un besoin de disposer d'un outillage permettant de respecter les contraintes de centrage tout en remédiant aux problèmes précités.

De plus un tel outillage doit être utilisable sur différents moyens de portage des modules du turboréacteur, que ce soit en montage neuf ou réparation.

Il est également intéressant que l'outillage permette d'effectuer la fonction de tassement du module BP 3 sur le premier module 5 lors de l'accostage, puis une fonction d'extraction du module BP 3 avec son arbre 4, par exemple lors d'un démontage pour des opérations de réparation.

### Exposé de l'invention :

A cet effet, l'invention concerne un dispositif pour l'assemblage d'une turbomachine, destiné à centrer un arbre d'un deuxième module par rapport à un axe longitudinal d'un moyeu central creux placé en avant d'un premier module, l'avant et l'arrière étant définis par rapport au sens général d'écoulement des gaz dans la turbomachine, ledit premier module comportant une cavité longitudinale suivant ledit axe, débouchant en avant dans ledit moyeu creux et traversant le premier module suivant l'axe longitudinal jusqu'à une extrémité arrière, ledit arbre devant être inséré dans ladite cavité longitudinale par ladite extrémité arrière, comprenant un élément de centrage d'axe central, comportant des extrémités et configuré pour être mis en place dans ledit moyeu creux en l'insérant par une première de ses extrémités et coopérer avec ce dernier pour faire coïncider son axe central avec ledit axe longitudinal, le dispositif comportant un tube de guidage configuré pour pouvoir entrer dans au moins une partie de la cavité longitudinale du premier module, en arrière du moyeu creux, et en ce que le dispositif est agencé pour que le tube de guidage coulisse à l'intérieur de l'élément de centrage le long dudit axe central, entre une première position, dans laquelle le tube de guidage est entièrement du côté de l'élément de centrage par rapport à ladite première extrémité, et une position arrière, dans laquelle le tube de guidage dépasse de ladite première extrémité, de manière à pénétrer dans la cavité longitudinale lorsque l'élément de centrage est mis en place dans le moyeu creux.

La première position du tube de guidage permet d'insérer l'élément de centrage dans le moyeu creux sans risquer d'abîmer un revêtement intérieur du premier module par un contact avec le tube de guidage. La position arrière du tube de guidage permet d'aller chercher le plus loin possible dans le deuxième module l'arbre ou un guide arbre placé en bout de l'arbre, pour limiter l'amplitude des balancements lors des déplacements. De plus la longueur de guidage supplémentaire assurée par le tube de guidage dans lequel peut coulisser le guide arbre permet d'obtenir un guidage axial précis de l'arbre. En particulier, en fin d'accostage, cela permet d'assurer l'engagement de labyrinthes. Les manipulations sont ainsi nettement simplifiées en évitant des vérifications systématiques de centrage.

Avantageusement, en position arrière, le tube de guidage s'enfonce au moins au milieu du corps HP dans une turbomachine telle que décrite en introduction.

De préférence, une première extrémité du tube de guidage est adaptée pour rentrer dans l'élément de centrage par une deuxième extrémité de ce dernier, opposée à la première extrémité suivant l'axe central, de manière à ce que la première position du tube de guidage corresponde à sa désolidarisation de l'élément de centrage.

Cela permet de diminuer le poids et l'encombrement de l'élément à introduire en premier dans le moyeu creux, en le limitant à l'élément de centrage seul, et donc de faciliter la manipulation des différentes parties de l'outillage.

Avantageusement, l'élément de centrage comporte des premiers moyens destinés à coopérer par contact avec le moyeu creux, situés à ladite première extrémité de l'élément de centrage, et des deuxièmes moyens situés à proximité d'une extrémité opposée à la première extrémité selon l'axe central et destinés à coopérer par verrouillage, par exemple une liaison crabotée, avec le moyeu creux.

L'éloignement entre les premiers et deuxièmes moyens permet de tirer parti de la longueur de l'élément de centrage pour obtenir la précision voulue sur le centrage. La liaison par contact sur la première extrémité permet de centrer l'élément de centrage et de le maintenir dans le moyeu creux avec facilité, cette extrémité n'étant pas visible lorsque l'élément est inséré. Par ailleurs, la limitation des moyens de fixation aux seules deux extrémités permet de limiter les surfaces à adapter pour les contacts et traiter le reste de la surface interne du moyeu creux avec un revêtement anti-corrosion semblable au reste des parois de la cavité longitudinale.

De préférence, le dispositif comporte en outre un guide arbre agencé pour pouvoir être inséré par une première extrémité dans le tube de guidage et pour être fixé audit arbre du deuxième module par une deuxième extrémité, le dispositif étant configuré pour que le tube de guidage coopère avec le guide arbre pour maintenir ce dernier sur l'axe central du dispositif lorsque le guide arbre est translaté vers l'avant, et la somme de la longueur du tube de guidage et de la longueur du guide arbre étant supérieure à l'extension de la cavité longitudinale du premier module.

La présence du guide arbre, avec une longueur adéquate, permet d'éviter d'introduire l'arbre à l'intérieur de la cavité longitudinale du premier module avant que l'arbre n'ait été correctement centré à l'aide du tube de guidage. Cela permet de supprimer les risques de contact de l'arbre avec des parois de la cavité longitudinale dans le premier module.

Avantageusement, le guide arbre coulisse à l'intérieur du tube de guidage jusqu'à ce qu'une butée axiale du guide arbre soit en contact avec ladite première extrémité du tube de guidage.

Le coulissement du guide arbre dans le tube de guidage permet de réaliser facilement le centrage du guide arbre et donc de l'arbre lors de sa progression. La butée empêche le tube de guidage d'entrer en contact avec l'arbre.

Avantageusement, le guide arbre comprend une gorge à une distance donnée de ladite butée axiale et le tube de guidage comprend des lumières situées sensiblement à la même distance de sa première extrémité, de manière à donner un accès radial extérieur à la gorge.

La présence de la gorge permet d'agripper le guide arbre pour lui exercer un effort longitudinal lors de phases de l'accostage où l'on veut effectuer un tassement du deuxième module sur le premier module.

De préférence, le dispositif comporte des moyens de serrage longitudinal fixés à l'élément de centrage par une deuxième extrémité de ce dernier opposée à sa première extrémité, lesdits moyens de serrage comportant des broches axiales adaptées pour traverser les lumières du tube de guidage et coopérer avec la gorge du guide arbre afin d'appliquer à ce dernier un effort le long de l'axe central.

Avantageusement, les moyens de serrage sont supportés par une pièce désolidarisable de l'élément de centrage.

Cela permet de limiter le poids de l'élément de centrage lors de sa manipulation pour l'installer dans le moyeu creux.

De préférence, le dispositif comprend en outre un élément configuré pour être fixé sur l'élément de centrage ou un élément de serrage fixé à l'élément de centrage et un élément carter du premier module, de manière à empêcher la rotation du dispositif autour de l'axe longitudinal.

L'invention concerne également un procédé d'assemblage d'une turbomachine utilisant un dispositif selon la description précédente, la turbomachine comprenant au moins un premier module comportant une cavité longitudinale, débouchant en avant dans un moyeu creux et traversant le premier module suivant un axe longitudinal du moyeu creux jusqu'à une extrémité arrière, et au moins un deuxième module avec un arbre, ledit arbre devant être engagé dans ladite cavité longitudinale par ladite extrémité arrière jusqu'à une position d'assemblage, le procédé comprenant les étapes suivantes :
- installation de l'élément de centrage dans le moyeu creux, le tube de guidage étant dans la première position ou absent de l'élément de centrage ;
- coulissement du tube de guidage au travers de l'élément de centrage jusqu'à la position arrière ;
- accostage du deuxième module jusqu'à une position où une extrémité libre de l'arbre ou un guide arbre fixé à l'arbre entre dans l'extrémité arrière du tube de guidage, de manière à ce que le tube de guidage guide l'arbre selon l'axe longitudinal du moyeu creux ;
- translation longitudinale du deuxième module avec une progression de l'arbre centré sur l'axe longitudinal du moyeu creux par le tube de guidage, jusqu'à la position d'assemblage.

Comme indiqué précédemment, les modules peuvent être autres que ceux décrits en introduction et le moyeu creux peut être une pièce fixe ou mobile en rotation.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
la figure 1 montre une turbomachine au cours de l'accostage d'un deuxième module sur un premier module ;
la figure 2 montre une coupe longitudinale d'un premier module de turbomachine équipé d'un outillage selon l'invention, avec le guide arbre de la figure 6 introduit à l'arrière ;
la figure 3 montre une vue en perspective d'un élément de centrage appartenant à l'outillage selon l'invention :
la figure 4 montre schématiquement la manipulation de l'élément de centrage de la figure 3 avec un outil de manipulation ;
la figure 5 montre en perspective un tube de guidage appartenant à l 'outillage selon l'invention ;
la figure 6 montre en perspective un guide arbre utilisé dans l'outillage selon l'invention ;
la figure 7 montre en perspective une clé de tassement utilisée dans l'outillage selon l'invention;
la figure 8 montre en perspective un détail de la fixation de la clé de tassement de la figure 7 sur l'élément de centrage de la figure 3 ;
les figures 9 et 10 montrent en perspective deux positions du tube de guidage de la figure 5 par rapport à l'ensemble formé de l'élément de centrage de la figure 3 et de la clé de tassement de la figure 7 ;
la figure 11 montre une barre anti-rotation utilisée dans l'outillage selon l'invention ;
la figure 12 montre, avec une coupe longitudinale, le résultat d'une étape du procédé selon l'invention dans laquelle l'élément de centrage de la figure 3 a été installé sur le premier module de la turbomachine ;
la figure 13 montre le résultat d'une étape du procédé selon l'invention dans laquelle la clé de tassement de la figure 7 a été installée sur l'élément de centrage monté comme indiqué sur la figure 12 ;
la figure 14 montre une étape du procédé selon l'invention dans laquelle le tube de guidage de la figure 5 est installé dans la clé de tassement et l'élément de centrage montés comme indiqué sur la figure 13 ;
la figure 15 montre une étape du procédé selon l'invention dans laquelle la barre anti-rotation de la figure 11 est installée sur les éléments de l'outillage selon l'invention montés comme indiqué sur la figure 14 ;
la figure 16 montre, avec une coupe longitudinale, le résultat d'une étape du procédé selon l'invention dans laquelle le guide arbre de la figure 6 a traversé vers l'avant les éléments de l'outillage selon l'invention après avoir été introduit comme indiqué sur la figure 2 ;
la figure 17 montre un détail de la figure 16 au niveau de l'interaction entre le guide arbre de la figure 6 et la clé de tassement de la figure 7.

### Description d'un mode de réalisation :

L'outillage selon l'invention est destiné à pouvoir être utilisé en particulier lors d'une phase de montage illustrée sur la figure 1, déjà décrite en introduction. Avant de décrire l'outillage et la manière de l'utiliser, il convient de préciser succinctement le type de turbomachine à laquelle il s'applique.

La figure 2 montre le premier module 5 tel que défini précédemment, c'est à dire le corps de soufflante amont 1 et le corps HP 2 assemblés, avec l'outillage installé pour une phase de montage. Le premier module 5 comprend une structure fixe 13, appelée ici le premier carter, qui supporte les parties tournantes 14 du corps HP 2, ici le compresseur haute pression 15 et la turbine haute pression 16, ainsi que les parties tournantes 17 du corps de soufflante amont 1, destinées à être entraînées par l'arbre BP 4, ici la soufflante 18 et le compresseur basse pression 19. Le module BP 3 n'est pas représenté sur la figure. Seule l'extrémité avant de l'arbre basse BP 4 est représentée, à l'extérieur de l'arrière du premier module 5.

Les éléments du premier module 5 ménagent une cavité longitudinale 20, centrée sur l'axe X de symétrie du premier module 5 et qui le traverse de part en part. En avant du module 5, la cavité longitudinale 20 se termine dans un moyeu creux 21, qui est ici solidaire des parties tournantes 17 du corps de soufflante amont 1. En arrière du moyeu creux 21, des moyens de couplage 22 de ces parties tournantes 17 avec l'arbre BP 4 sont installés dans la cavité longitudinale 20. En arrière de ces moyens de couplage 22, le diamètre minimal de la cavité longitudinale 20 est sensiblement supérieur à celui de l'arbre BP 4, de manière à le laisser passer sans frottements. Il n'y a pas de palier maintenant l'arbre BP dans la cavité longitudinale 20 du premier module 5, entre lesdits moyens de couplage 22 aux parties tournantes du corps de soufflante amont 1 et l'arrière du corps HP 2. On notera ici que les surfaces des pièces du premier module 5 délimitant la cavité longitudinale 20 sont traitées avec un revêtement anti-corrosion qui peut être altéré en cas de contact lors du passage de l'arbre BP 4 ou d'un guide arbre 10, au cours du montage.

Le moyeu creux en avant des moyens de couplage a une extension longitudinale Lm significative. Sur l'exemple, cette extension Lm est au moins aussi grande que celle de la roue mobile de la soufflante 18. La partie interne du corps du moyeu creux 21 est cylindrique, de diamètre sensiblement plus large que celui de la cavité longitudinale 20 au niveau desdits moyens de couplage 22. La partie interne du moyeu creux comporte, au niveau de son extrémité débouchant sur l'avant, des créneaux 23 destinés à former les premiers éléments d'une liaison par crabotage avec une pièce venant se fixer à cet endroit. L'extrémité arrière de la partie interne du moyeu creux 22 comporte une surface de contact 24, ici sensiblement cylindrique, destinée à former un appui pour une pièce venant se loger à l'intérieur de cette surface de contact pour être centrée sur l'axe longitudinal X. Les géométries de la surface de contact 24 et des éléments créneaux 23 de la liaison crabotée sont définies en liaison avec l'extension longitudinale Lm du moyeu creux 21 de manière à ce que l'axe longitudinal X' d'une pièce fixée entre ces deux moyens coïncide avec l'axe longitudinal X du premier module 5 selon la précision demandée pour les opérations de montage. En référence aux chiffres cités en introduction, cette précision correspond typiquement à un jeu minimum de 0,5 mm au niveau de l'arbre BP 4 et un jeu de 0,08mm au niveau des labyrinthes.

On notera aussi que la surface interne du moyeu creux 21 est traitée, comme l'ensemble de la cavité longitudinale 20 avec un revêtement anticorrosion, à l'exception des éléments 23 de la liaison crabotée et de la surface de contact 24. Les éléments 23 de la liaison crabotée sont formés en aluminium. La surface de contact 24 est recouverte d'un matériau nommé « métal synthétique », formé de polymères intrinsèquement conducteurs.

L'outillage selon l'invention comporte plusieurs éléments coopérant lors des étapes successives de l'accostage mais dissociables les uns des autres.

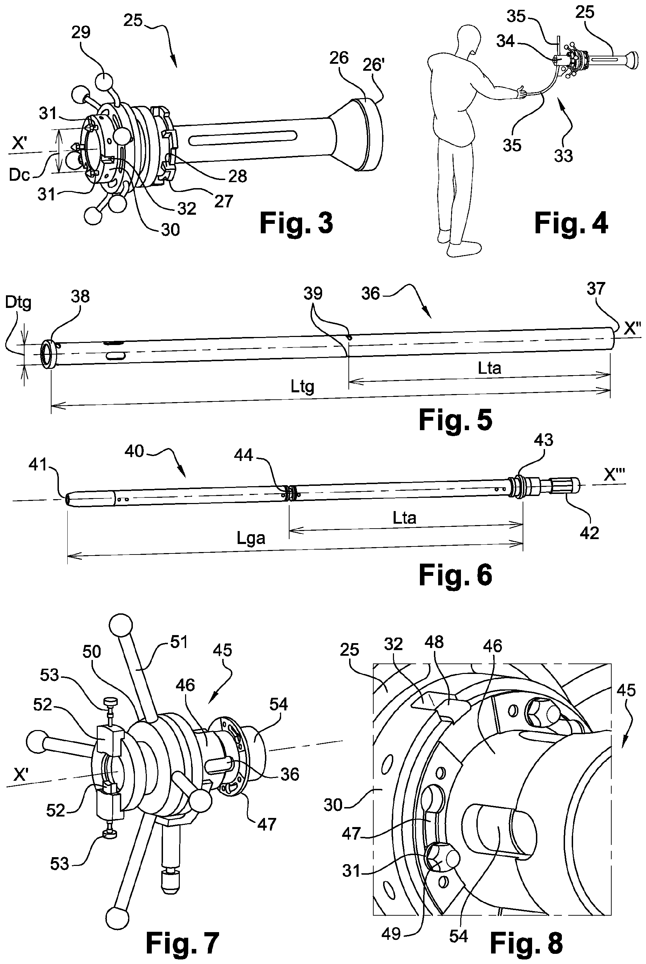

Le premier élément 25, dit élément de centrage, est une pièce destinée à être installée dans la partie interne du moyeu creux 21, de manière à centrer les autres éléments et l'arbre BP 4 sur l'axe longitudinal X du premier module 5. En référence à la figure 3, il s'agit d'une pièce tubulaire de révolution autour d'un axe X', ayant une cavité intérieure cylindrique, d'un diamètre Dc de valeur inférieure à la plus petite valeur du diamètre de la cavité centrale 20 du premier module 5. Le corps central de l'élément 25 a un diamètre extérieur sensiblement inférieur à celui de la surface interne du moyeu creux 21. L'élément 25 comporte, à une extrémité longitudinale 26', une surface externe de contact 26 sensiblement cylindrique et de diamètre égal à celui de la surface de contact 24 dans le moyeu creux 21 du premier module 5, et, à l'extrémité opposée, des créneaux 27 formant des éléments de liaison crabotés conformés pour coopérer avec les éléments créneaux 23 du moyeu creux 21, afin de former une liaison crabotée. Ces deux moyens 26, 27, sont espacés selon l'axe longitudinal X' d'une distance sensiblement égale à celle existant entre les moyens correspondants 23, 24, sur le moyeu creux 21 selon l'axe longitudinal X. De cette manière, l'élément de centrage 25 peut être inséré par l'avant du premier module 5 dans le moyeu creux 21 de telle sorte que, lorsque la liaison crabotée est formée entre les éléments correspondants 23 et 27, la surface de contact 24 de l'intérieur du moyeu ceux 21 et celle 26 de l'extérieur de l'élément de centrage 25 sont en contact, maintenant ce dernier dans une position où son axe X' coïncide avec l'axe longitudinal X du premier module 5 selon la précision voulue.

La surface de contact 26 de l'élément de centrage 25 est traitée avec le même matériau nommé « métal synthétique » que la surface de contact 24 du moyeu creux 21. Les moyens 27 coopérant avec ceux 23 du moyeu creux 21 pour la liaison crabotée sont ici en aluminium, comme ces derniers. Comme on peut le voir sur la figure 3, les créneaux 27 comportent des butées 28 en rotation pour arrêter les créneaux 27 de l'élément de centrage 25 en face de ceux des créneaux 23 du moyeu creux 21 lorsque la liaison crabotée est formée.

L'élément de centrage 25 comporte aussi une tête, placée à son extrémité en avant des moyens pour la liaison crabotée. Cette tête est destinée à rester à l'extérieur du moyeu creux. Elle comporte des bras radiaux 29 conformés pour pouvoir être agrippés à la main et exercer un effort de rotation afin de verrouiller la liaison crabotée, une fois que les créneaux 27 sont engagés derrière ceux 23 des moyens correspondants sur le moyeu creux 21. La tête comporte aussi à son extrémité libre, sur cet exemple, un disque plat 30 portant des pions longitudinaux 31 filetés répartis circonférentiellement, et une encoche 32 externe en périphérie. Cet ensemble forme des moyens agencés pour coopérer avec ceux d'une deuxième pièce, décrite par la suite, et former entre eux une liaison « quart de tour » qui solidarise la dite deuxième pièce à l'élément de centrage.

Avantageusement, le poids de l'élément de centrage 25 est limité pour pouvoir être manipulé par un seul opérateur. Néanmoins, compte tenu des contraintes qu'il doit supporter, ce poids, typiquement 12kg, peut entraîner un effet de levier significatif lorsqu'il s'agit de maintenir l'élément par une extrémité pour l'introduire dans le moyeu creux 21. Avantageusement, en référence à la figure 4, un outil 33 complémentaire de manipulation peut être utilisé. Il s'agit d'un outil comprenant une tige longitudinale 34 conçue pour s'introduire à l'intérieur de l'élément de centrage 25, comportant à son extrémité deux bras 35 s'étendant radialement et destinés à la préhension. Comme indiqué sur la figure 4, l'outil 33 de manipulation permet facilement de maintenir sensiblement horizontal l'élément de centrage 25 afin de l'introduire dans le moyeu creux 21.

En référence à la figure 5, le deuxième élément de l'outillage est un tube de guidage 36 agencé pour coulisser à l'intérieur de la cavité cylindrique de l'élément de centrage 25 en restant en contact avec celle-ci, de manière à se déplacer longitudinalement en restant centré sur l'axe X' du premier élément 25. Le diamètre extérieur du corps du tube de guidage 36 est donc égal à celui Dc de la cavité cylindrique de l'élément de centrage 25. De plus, l'une de ses extrémités, dite extrémité arrière 37 a un diamètre extérieur inférieur ou égal au corps tubulaire, de sorte que le tube de guidage 36 puisse être introduit dans l'élément de centrage 25 par l'extrémité avant de ce dernier. Le tube de guidage 36 a une longueur Ltg définie pour qu'il dépasse sensiblement de l'extrémité arrière de l'élément de centrage 25 lorsqu'il est coulissé vers l'arrière et que son extrémité opposée, ou extrémité avant, dépasse de l'extrémité avant de l'élément de centrage 25. Sur l'exemple considéré, la longueur Ltg du tube de guidage 36 est sensiblement supérieure à la distance séparant l'extrémité avant du premier module 5 et l'avant du corps HP 2, de manière à se rapprocher de l'extrémité arrière du premier module 5.

Le tube de guidage 36 est creux, de diamètre Dtg, de manière à recevoir par son extrémité arrière 37 une tige qui vient y coulisser pour rester centrée sur l'axe longitudinal X" du tube de guidage 36. L'extrémité avant du tube de guidage 36 comporte ici une bague 38 de diamètre supérieur à celui du tube, de manière à former une butée longitudinale sur le tube de guidage 36. A une distance Lta déterminée de son extrémité arrière 37, le tube de guidage 36 comporte des lumières 39 transversales, agencées pour laisser passer radialement des broches.

Avantageusement, pour éviter d'enfoncer l'arbre BP 4 dans le premier module 5, un élément guide arbre 40, représenté sur la figure 6, est destiné à être fixé audit arbre BP 4. Le guide arbre 40 forme une tige adaptée pour s'insérer par une extrémité avant 41 dans l'extrémité arrière 37 du tube de guidage 36 et pour coulisser à l'intérieur de ce dernier en restant centrée sur son axe X". Son extrémité arrière comporte une tête 42 adaptée pour être fixée à l'avant de l'arbre BP 4 et comporte une butée axiale 43 destinée à bloquer le coulissement du guide arbre 40 dans le tube de guidage 36. La longueur Lga du guide arbre 40, en correspondance avec la conception du tube de guidage 36, est définie de manière à ce que la longueur Ltg du tube de guidage 36 ajoutée à celle Lga du guide arbre 40 soit sensiblement supérieure à celle du premier module 5 le long de l'axe longitudinal X, pour que la tête 42 de l'extrémité arrière du guide arbre 40 dépasse de l'extrémité arrière du premier module 5 alors que l'extrémité avant 38 du tube de guidage 36 dépasse par l'avant du premier module 5, lorsque ces éléments sont mis bout à bout dans la cavité longitudinale 20. De plus, le guide arbre 40 possède une gorge 44 destinée à coopérer avec des broches radiales pour bloquer son déplacement longitudinal. Cette gorge 44 est à une distance de la butée axiale 43 sensiblement égale à celle Lta qui sépare les lumières 39 du tube de guidage 36 de l'extrémité arrière 37 de ce dernier, de manière à ce que la gorge 44 et les lumières 39 soient en correspondance lorsque que le guide arbre 40 arrive en butée sur l'arrière 37 du tube de guidage 36 et que les lumières 39 laissent passer de l'extérieur des broches radiales jusqu'à la gorge 44. On notera que cette distance est sensiblement supérieure à l'extension longitudinale de l'élément de centrage 25 pour que la gorge dépasse de ce dernier par l'avant lorsque le guide arbre 40 est coulissé vers l'avant du premier module jusqu'à ce que sa tête arrière 42, arrive en position derrière l'élément de centrage 25 et amène l'arbre BP 4 en face des moyens de couplage 22 avec les éléments tournant 17 du module de soufflante avant 1. Dans ce cas, lesdites broches censées bloquer le mouvement axial du guide arbre 40 peuvent être insérées de l'extérieur de l'élément de centrage 25, en avant du premier module 5.

Avantageusement, l'outillage comporte aussi un élément dit clé de tassement 45 qui vient se fixer à l'avant de l'élément de centrage 25 par la liaison quart de tour indiquée plus haut avec les pions longitudinaux 31 filetés. Le corps tubulaire 46 est alors centré sur l'axe central X' de l'élément de centrage 25. En référence à la figure 7, cet élément 45 comporte un corps tubulaire 46 supportant des fentes circonférentielles 47 agencées pour coopérer avec les pions longitudinaux 31 de la tête avant 30 de l'élément de centrage 25, pour former la liaison quart de tour, comme indiqué sur la figure 8. En référence à la figure 8, la clé de tassement 45 comporte également un doigt anti rotation 48 qui est engagé dans l'encoche externe 32 de l'élément de centrage 25 lorsque que les pions longitudinaux 31 sont correctement positionnés dans les fentes circonférentielles 47. La liaison quart de tour est ensuite verrouillée par des écrous 49 serrés sur les pions longitudinaux 31 filetés.

Le corps tubulaire 46 de la clé de tassement 45 supporte un cabestan 50 avec des bras radiaux 51 agencés pour être tournés manuellement. La rotation du cabestan 50 permet de lui imprimer un mouvement longitudinal en avant ou en arrière le long de l'axe central X', par rapport au corps tubulaire 46.

Le cops tubulaire 46 et le cabestan 50 sont conçus pour laisser libre une cavité longitudinale dans l'axe X' de l'élément de centrage 25 et de diamètre suffisant pour laisser passer le tube de guidage 36.

L'extrémité avant du cabestan 50 emmène un système comportant ici deux broches 52 qui sont mobiles radialement et qui peuvent être placées soit dans une position « retirée », où elles sont à une distance de l'axe central X' égale au demi diamètre de la cavité centrale de l'élément de centrage et laissent libre la cavité longitudinale centrale, soit dans une position « engagée » où elles peuvent s'enficher dans la gorge 44 du guide arbre 40 pour le bloquer longitudinalement. Les broches 52 sont complétées par un système mécanique 53 permettant de les verrouiller pour exercer un effort radial sur la surface externe du tube de guidage 36.

Avantageusement, le corps 46 de la clé de tassement 45 comporte des lumières longitudinales 54 qui permettent de surveiller la progression du guide arbre 36 dans la clé de tassement.

Sur l'exemple, la clé de tassement 45 est conçue d'un poids suffisamment faible, typiquement 4kg, pour pouvoir être manipulée aisément lors de sa fixation sur l'élément de centrage 25.

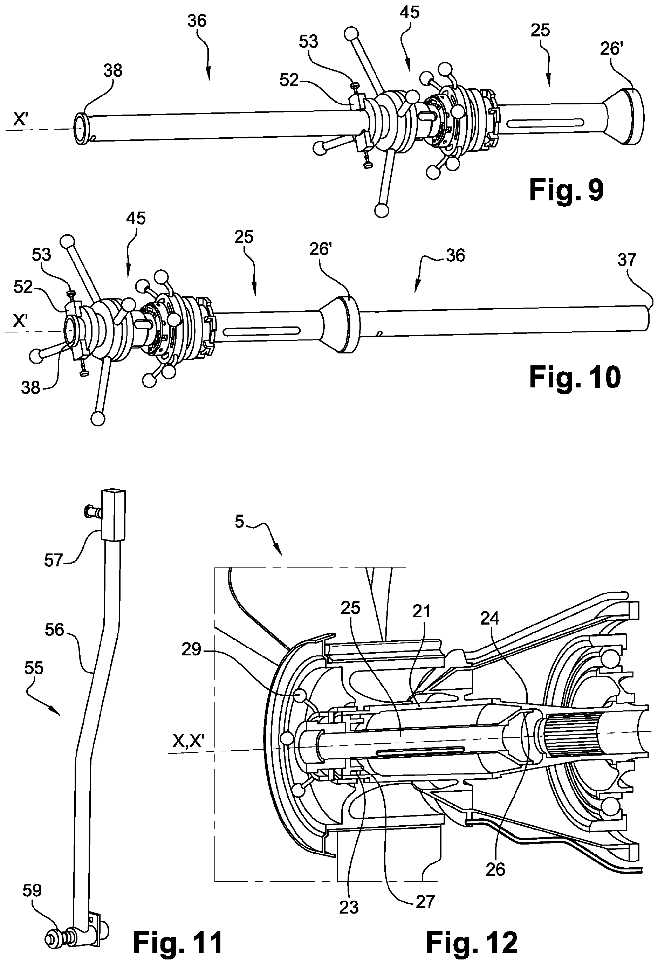

Lorsque la clé de tassement 45 est assemblée à l'élément de centrage 25 et que les broches 52 sont en position retirée, l'ensemble forme donc un organe au travers duquel le tube de guidage 36 et le guide arbre 40 peuvent coulisser longitudinalement, le long de l'axe X' de l'élément de centrage 25. Si l'on considère en particulier le tube de guidage 36, ce dernier, une fois introduit à l'avant de cet organe par son extrémité arrière 37, peut se trouver dans deux positions remarquables entre lesquelles il peut coulisser. Dans une première position, dite position d'attente, illustrée sur la figure 9, il est maintenu dans l'organe mais son extrémité arrière ne dépasse pas de l'extrémité arrière 26' de l'élément de centrage 25. Dans une deuxième position, illustrée sur la figure 10, le tube de guidage 36 dépasse de l'extrémité arrière 26' de l'élément de centrage 25 et sa tête 38 située à l'extrémité avant est en butée sur les broches 52 de la clé de tassement.45. On notera que le tube de guidage 36 peut être bloqué dans cette position en serrant les broches 52 sur sa surface externe par les moyens mécaniques 53 prévus à cet effet.

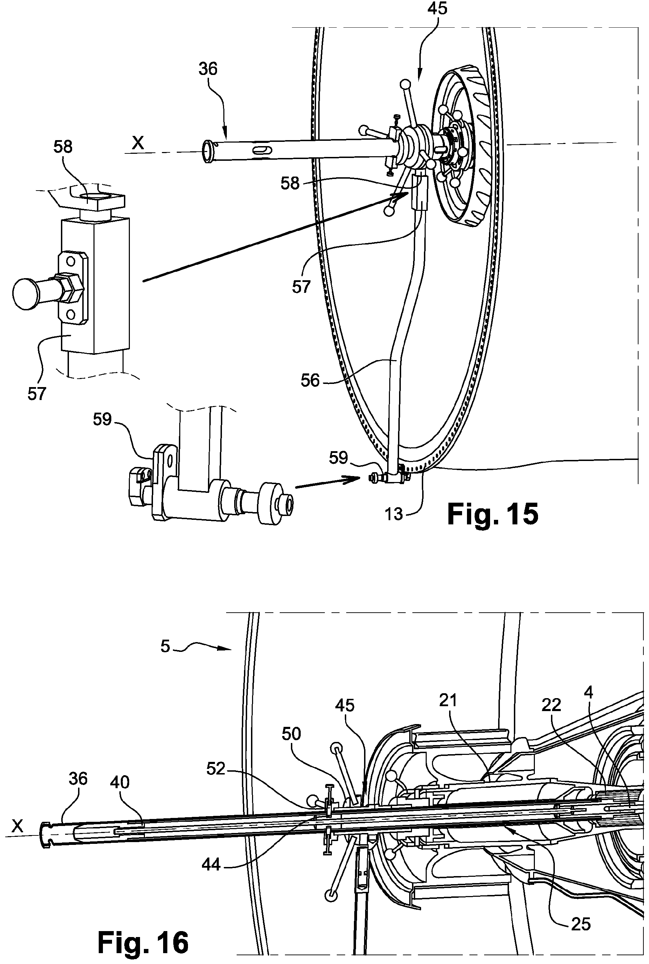

De préférence, le moyeu creux 21 sur lequel l'élément de centrage 25 doit être fixé étant mobile en rotation, l'outillage comporte encore un élément 55 empêchant la rotation de l'ensemble. En référence à la figure 11, cet élément d'anti-rotation 55 est composé ici d'une barre transversale 56 amovible. Comme illustré sur la figure 15, la barre anti-rotation 56 comporte à une extrémité une fixation 57 agencée pour recevoir une broche 58 prévue à cet effet sur la clé de tassement 45 et, à son autre extrémité, une pince 59 destinée à accrocher le carter 13, en périphérie de la soufflante 18.

Un tel outillage peut être utilisé pour assurer un centrage correct du deuxième module 3 lors de l'accostage dans le premier module 5. La figure 1 décrite précédemment illustre un montage dans lequel le premier module 5 est maintenu fixe, ici sous un portique 8, avec son axe longitudinal X à l'horizontal et le deuxième module 3 est maintenu par un palan 9 soutenu par ledit portique 8, mobile en translation de manière à réaliser l'accostage.

De préférence, le procédé de montage selon l'invention commence par l'équipement du premier module 5 avec les éléments correspondants de l'outillage, le premier module 5 étant maintenu à l'horizontal sous le portique.

Dans une première étape, l'élément de centrage 25 est installé dans le moyeu creux 21 à l'avant du premier module 5. Pour cela, l'opérateur installe l'outil de manipulation 33 décrit précédemment comme indiqué sur la figure 4 et introduit horizontalement l'élément de centrage 25 dans le moyeu creux 21 jusqu'à ce que les créneaux 27 de l'élément traversent les créneaux 23 correspondant de la liaison crabotée sur le moyeu creux et que la surface de contact 26 de l'élément de centrage 25 appuie sur la surface de contact 24 du moyeu creux 21. Ensuite, après avoir retiré l'outil de manipulation 33, l'opérateur fait tourner l'élément de centrage 25 autour de l'axe longitudinal X à l'aide des bras radiaux 29, jusqu'à ce que les butées 28 de la liaison crabotée bloquent le mouvement. A la fin de cette étape, comme illustré sur la figure 12, l'élément de centrage 25 est donc fixé dans le moyeu creux 21 par la liaison crabotée avec appui des surfaces de contact 24, 26 et son axe longitudinal X' est confondu avec l'axe longitudinal X du moyeu creux 21.

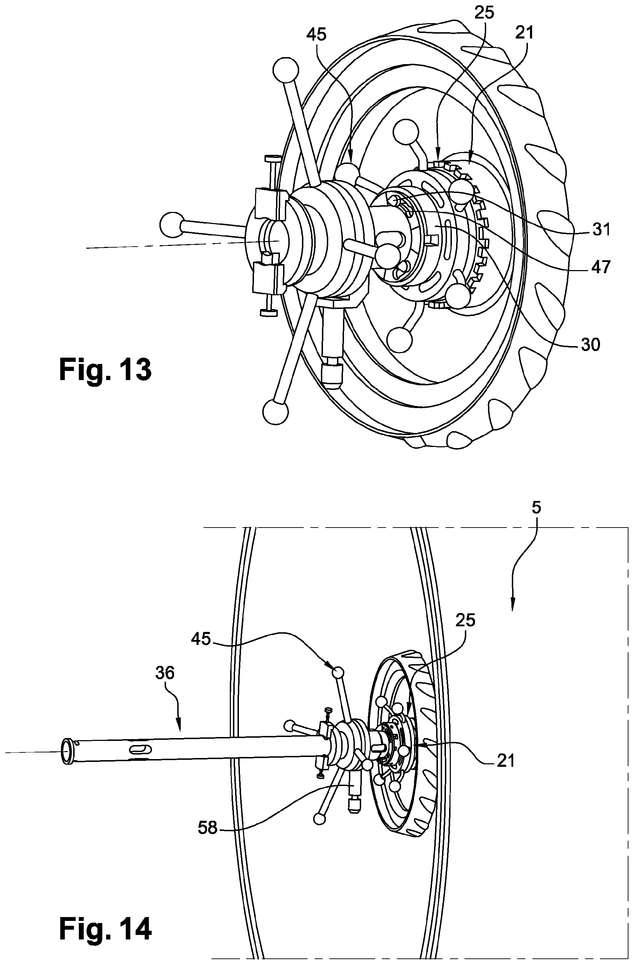

Dans une deuxième étape, la clé de tassement est installée sur l'élément de centrage en verrouillant la liaison quart de tour 30, 31, 47, décrite précédemment. A la fin de cette étape, comme illustré sur la figure 13, l'ensemble formé de l'élément de centrage 25 et de la clé de tassement 45 est fixé sur l'avant du moyeu creux 21.

Dans une troisième étape, en référence à la figure 14, l'opérateur engage le tube de guidage 36 par son extrémité arrière 37 dans l'ensemble formé de l'élément de centrage 25 et de la clé de tassement 45, jusqu'à l'installer dans la position d'attente décrite sur la figure 9.

Dans une quatrième étape, la barre anti-rotation 56 est installée comme illustré sur la figure 15. Elle est d'abord engagée dans la broche 58 correspondante de la clé de tassement 45, puis fixée en périphérie du carter 13 par sa pince 59.

Dans une cinquième étape, le tube de guidage 36 est coulissé vers l'arrière dans la deuxième position décrite à la figure 10, avec sa tête 38 en butée sur les broches 52 de la clé de tassement 45. Ces dernières sont mises en appui sur sa surface externe, de manière à bloquer un coulissage du tube de guidage 36 vers l'avant. A la fin de cette étape, comme illustré sur la figure 2, le premier module est équipé, prêt à accueillir le guide arbre 40 pour l'accostage du deuxième module 3.

Dans une étape qui peut être effectuée parallèlement aux étapes précédentes, le guide arbre 40 est fixé par son extrémité arrière sur l'extrémité avant de l'arbre BP 4, du deuxième module 3.

Dans une sixième étape, illustrée sur la figure 1, le deuxième module 3, soutenu ici par un palan mobile 9, est présenté horizontalement devant l'arrière du premier module 5. Un opérateur surveille et aide à l'introduction du guide arbre 40 dans la cavité longitudinale 20 du premier module 5, pour que le guide arbre 40 progresse horizontalement dans la cavité longitudinale 20 jusqu'à ce que son extrémité 41 avant rentre dans le tube de guidage 36. Comme illustré sur la figure 2, le guide arbre 40 est alors centré sur l'axe longitudinal X du premier module 5 par le tube de guidage 36 alors même que l'arbre BP 4 du deuxième module 3 n'est pas encore introduit dans la cavité longitudinale 20. Puis le guide arbre 40 coulisse dans le tube de guidage 36 jusqu'à ce que sa butée axiale 43 atteigne l'extrémité arrière 37 du tube de guidage 36.

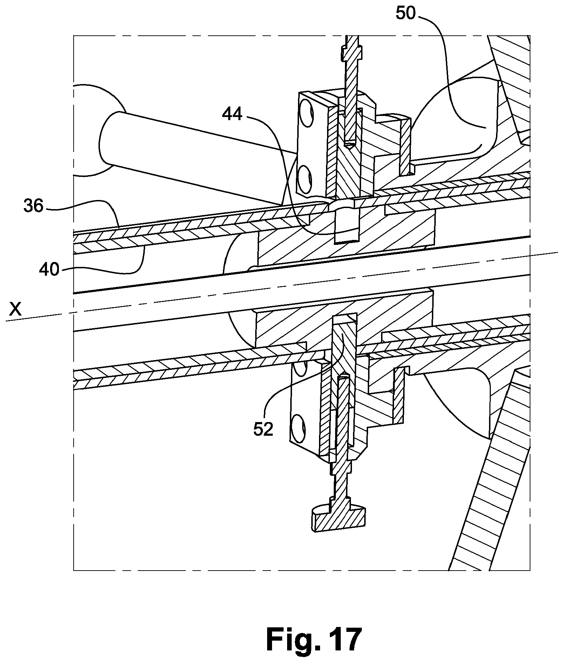

Dans une septième étape, on déverrouille les broches 52 qui bloquent le tube de guidage 36 et l'on fait progresser le deuxième module 3 vers l'avant en le maintenant centré sur l'axe longitudinal X du premier module 5. L'arbre 4 du deuxième module 3 pousse alors le guide arbre 40 et le tube de guidage 36 vers l'avant. Le guide arbre étant maintenu sur l'axe longitudinal X par le tube de guidage 36, l'ensemble ne risque pas de venir cogner sur des parois de la cavité longitudinale 20 sous l'effet de balancements dus à la progression du deuxième module 3. La progression est arrêtée lorsque la gorge 44 du guide arbre 40 est en face des broches 52 situées sur le cabestan 50 de la clé de tassement 45, comme illustré sur la figure 16. La tête de l'arbre 4 du deuxième module 3 est alors aussi engagée dans les moyens de couplage 22 avec les éléments tournants 17 du module de soufflante avant. On insère alors les broches 52 dans la gorge 44 du guide arbre 40 pour solidariser ce dernier avec le cabestan 50 suivant l'axe longitudinal X, comme illustré sur la figure 17.

Dans une huitième étape, les derniers centimètres de progression longitudinale de l'arbre 4 et du deuxième module 3 sont effectués en actionnant manuellement le cabestan 50, pour insérer la tête de l'arbre dans les moyens de couplage 22 des éléments tournants 17 du module de soufflante avant et pour maîtriser l'accouplement précis des éléments des labyrinthes d'étanchéité à l'interface du premier 5 et du deuxième 3 modules, jusqu'à ce que les brides 6, 7, desdits modules soient fixées entre elles.

On notera ici que la clé de tassement 45 peut aussi être utilisée en sens inverse, lors du démontage du moteur, pour découpler les deux modules 3, 5, avant de les séparer.

L'outillage, dont les éléments peuvent alors être démontés des deux modules, a ainsi permis d'effectuer l'accostage en respectant les précisions de centrage voulues et en évitant des contacts susceptibles de détériorer des éléments de l'un ou l'autre des deux modules. Comme évoqué plus haut, l'outillage peut être également utilisé lors du démontage de la turbomachine, pour éviter des contacts intempestifs lors de la translation du deuxième module 3 par rapport au premier module 5.

## Revendications

1. Dispositif pour l'assemblage d'une turbomachine, destiné à centrer un arbre (4) d'un deuxième module (3) par rapport à un axe longitudinal (X) d'un moyeu central creux (21) placé en avant d'un premier module (5), l'avant et l'arrière étant définis par rapport au sens général d'écoulement des gaz dans la turbomachine, ledit premier module (5) comportant une cavité longitudinale (20) suivant ledit axe (X), débouchant en avant dans ledit moyeu creux (21) et traversant le premier module (5) suivant l'axe longitudinal (X) jusqu'à une extrémité arrière, ledit arbre (4) devant être inséré dans ladite cavité longitudinale (20) par ladite extrémité arrière, comprenant un élément de centrage (25) d'axe central (X'), comportant des extrémités et configuré pour être mis en place dans ledit moyeu creux (21) en l'insérant par une première de ses extrémités (26') et coopérer avec ce dernier pour faire coïncider son axe central (X') avec ledit axe longitudinal (X), le dispositif comportant un tube de guidage (36) configuré pour pouvoir entrer dans au moins une partie de la cavité longitudinale (20) du premier module (5), en arrière du moyeu creux (21), et **caractérisé en ce que** le dispositif est agencé pour que le tube de guidage (36) coulisse à l'intérieur de l'élément de centrage (25) le long dudit axe central (X'), entre une première position, dans laquelle le tube de guidage (36) est entièrement du côté de l'élément de centrage (25) par rapport à ladite première extrémité (26'), et une position arrière, dans laquelle le tube de guidage (36) dépasse de ladite première extrémité (26'), de manière à pénétrer dans la cavité longitudinale (20) lorsque l'élément de centrage (25) est mis en place dans le moyeu creux (21).

2. Dispositif selon la revendication précédente, **caractérisé en ce qu'**une première extrémité (37) du tube de guidage (36) est adaptée pour rentrer dans l'élément de centrage (25) par une deuxième extrémité (30) de ce dernier, opposée à la première extrémité (26') suivant l'axe central (X'), de manière à ce que la première position du tube de guidage corresponde à sa désolidarisation de l'élément de centrage (25).

3. Dispositif selon l'une des revendications précédentes, dans lequel ledit élément de centrage (25) comporte des premiers moyens (26) destinés à coopérer par contact avec le moyeu creux (21), situés à ladite première extrémité (26') de l'élément de centrage, et des deuxièmes moyens (27) situés à proximité d'une extrémité (30) opposée à la première extrémité (26') selon l'axe central (X') et destinés à coopérer par verrouillage, par exemple une liaison crabotée, avec le moyeu creux (21)

4. Dispositif selon l'une des revendications précédentes, comprenant en outre un guide arbre (40) agencé pour pouvoir être inséré par une première extrémité (41) dans le tube de guidage (36) et pour être fixé audit arbre (4) du deuxième module (3) par une deuxième extrémité (42), le dispositif étant configuré pour que le tube de guidage (36) coopère avec le guide arbre (40) pour maintenir ce dernier sur l'axe central (X') du dispositif lorsque le guide arbre (40) est translaté vers l'avant, et la somme de la longueur (Ltg) du tube de guidage (36) et de la longueur (Lga) du guide arbre (40) étant supérieure à l'extension de la cavité longitudinale (20) du premier module (5).

5. Dispositif selon la revendication précédente, configuré pour que le guide arbre (40) coulisse à l'intérieur du tube de guidage (36) jusqu'à ce qu'une butée axiale (43) du guide arbre (40) soit en contact avec ladite première extrémité (37) du tube de guidage (36).

6. Dispositif selon la revendication précédente, dans lequel le guide arbre (40) comprend une gorge (44) à une distance donnée (Lta) de ladite butée axiale (43) et le tube de guidage (36) comprend des lumières (39) situées sensiblement à la même distance (Lta) de sa première extrémité (37), de manière à donner un accès radial extérieur à la gorge (44).

7. Dispositif selon la revendication précédente, **caractérisé en ce qu'**il comporte des moyens de serrage longitudinal (45) fixés à l'élément de centrage (25) par une deuxième extrémité (30) de ce dernier opposée à sa première extrémité (26'), lesdits moyens de serrage comportant des broches axiales adaptées pour traverser les lumières (39) du tube de guidage (36) et coopérer avec la gorge (44) du guide arbre (40) afin d'appliquer à ce dernier un effort le long de l'axe central (X') .

8. Dispositif selon la revendication précédente, **caractérisé en ce que** les moyens de serrage sont supportés par une pièce désolidarisable de l'élément de centrage (25).

9. Dispositif selon l'une des revendications précédentes comprenant un élément (55) configuré pour être fixé sur l'élément de centrage (25) ou un élément de serrage (45) fixé à l'élément de centrage (25) et un élément carter (13) du premier module (5), de manière à empêcher la rotation du dispositif autour de l'axe longitudinal (X).

10. Procédé d'assemblage d'une turbomachine utilisant un dispositif selon l'une des revendications précédentes, la turbomachine comprenant au moins un premier module (3) comportant une cavité longitudinale (20), débouchant en avant dans un moyeu creux (21) et traversant le premier module (5) suivant un axe longitudinal (X) du moyeu creux (21) jusqu'à une extrémité arrière, et au moins un deuxième module (3) avec un arbre (5), ledit arbre (5) devant être inséré dans ladite cavité longitudinale (20) par ladite extrémité arrière jusqu'à une position d'assemblage, le procédé comprenant une étape d'installation de l'élément de centrage (25) dans le moyeu creux (21), le tube de guidage (36) étant dans la première position ou absent de l'élément de centrage (25), **caractérisé en ce qu'**il comprend les étapes :
- coulissement du tube de guidage (36) au travers de l'élément de centrage (25) jusqu'à la position arrière ;
- accostage du deuxième module (3) jusqu'à une position où une extrémité libre de l'arbre (4) ou un guide arbre (40) fixé à l'arbre (4) entre dans l'extrémité arrière (37) du tube de guidage (36), de manière à ce que le tube de guidage (36) guide l'arbre selon l'axe longitudinal (X) du moyeu creux (21);
- translation longitudinale du deuxième module (3) avec une progression de l'arbre (4) centré sur l'axe longitudinal (X) du moyeu creux (21) par le tube de guidage (36), jusqu'à la position d'assemblage.

## Patentansprüche

1. Vorrichtung zum Zusammenbau einer Turbomaschine, die dazu bestimmt ist, eine Welle (4) eines zweiten Moduls (3) in Bezug auf eine Längsachse (X) einer mittigen Hohlnabe (21) zu zentrieren, die vor einem ersten Modul (5) angeordnet ist, wobei die Vorderseite und die Rückseite in Bezug auf die allgemeine Strömungsrichtung der Gase in der Turbomaschine definiert sind, wobei das erste Modul (5) einen Längshohlraum (20) entlang der Achse (X) umfasst, der nach vorne in die Hohlnabe (21) mündet und das erste Modul (5) entlang der Längsachse (X) bis zu einem hinteren Ende durchläuft, wobei die in den Längshohlraum (20) über das hintere Ende einzusetzende Welle (4) ein Zentrierelement (25) mit zentraler Achse (X') umfasst, das Enden umfasst und so konfiguriert ist, dass es in der Hohlnabe (21) durch Einsetzen über ein erstes seiner Enden (26') platziert wird und mit dieser zusammenwirkt, um seine zentrale Achse (X') mit der Längsachse (X) zusammenfallen zu lassen, wobei die Vorrichtung ein Führungsrohr (36) umfasst, das so konfiguriert ist, dass es in mindestens einen Teil des Längshohlraums (20) des ersten Moduls (5) hinter der Hohlnabe (21) eintreten kann, und **dadurch gekennzeichnet, dass** die Vorrichtung so angeordnet ist, dass das Führungsrohr (36) im Inneren des Zentrierelements (25) entlang der zentralen Achse (X') zwischen einer ersten Position, in der sich das Führungsrohr (36) vollständig auf der Seite des Zentrierelements (25) in Bezug auf das erste Ende (26') befindet, und einer hinteren Position gleitet, in der das Führungsrohr (36) aus dem ersten Ende (26') herausragt, um in den Längshohlraum (20) einzudringen, wenn das Zentrierelement (25) in der Hohlnabe (21) platziert ist.

2. Vorrichtung nach dem vorstehenden Anspruch, **dadurch gekennzeichnet, dass** ein erstes Ende (37) des Führungsrohrs (36) angepasst ist, in das Zentrierelement (25) über ein zweites Ende (30) desselben, das dem ersten Ende (26') entlang der zentralen Achse (X') gegenüberliegt, einzutreten, so dass die erste Position des Führungsrohrs seiner Abtrennung vom Zentrierelement (25) entspricht.

3. Vorrichtung nach einem der vorstehenden Ansprüche, wobei das Zentrierelement (25) erste Mittel (26) für ein Zusammenwirken durch Kontakt mit der Hohlnabe (21), die an dem ersten Ende (26') des Zentrierelements angeordnet sind, und zweite Mittel (27) umfasst, die in der Nähe eines Endes (30) gegenüber dem ersten Ende (26') entlang der zentralen Achse (X') angeordnet sind und für ein Zusammenwirken durch Verriegelung, zum Beispiel eine formschlüssige Verbindung, mit der Hohlnabe (21) bestimmt sind.

4. Vorrichtung nach einem der vorstehenden Ansprüche, weiter umfassend eine Wellenführung (40), die so angeordnet ist, dass sie über ein erstes Ende (41) in das Führungsrohr (36) eingesetzt werden und mit einem zweiten Ende (42) an der Welle (4) des zweiten Moduls (3) befestigt werden kann, wobei die Vorrichtung so konfiguriert ist, dass das Führungsrohr (36) mit der Wellenführung (40) zusammenwirkt, um diese auf der zentralen Achse (X') der Vorrichtung zu halten, wenn die Wellenführung (40) nach vorne verschoben wird, und die Summe der Länge (Ltg) des Führungsrohrs (36) und der Länge (Lga) der Wellenführung (40) größer als die Ausdehnung des Längshohlraums (20) des ersten Moduls (5) ist.

5. Vorrichtung nach dem vorstehenden Anspruch, die so konfiguriert ist, dass die Wellenführung (40) innerhalb des Führungsrohrs (36) gleitet, bis ein axialer Anschlag (43) der Wellenführung (40) in Kontakt mit dem ersten Ende (37) des Führungsrohrs (36) ist.

6. Vorrichtung nach dem vorstehenden Anspruch, wobei die Wellenführung (40) eine Nut (44) in einem gegebenen Abstand (Lta) von dem axialen Anschlag (43) umfasst und das Führungsrohr (36) Schlitze (39) umfasst, die im Wesentlichen in demselben Abstand (Lta) von seinem ersten Ende (37) angeordnet sind, um einen radialen Zugang von außen zu der Nut (44) zu ermöglichen.

7. Vorrichtung nach dem vorstehenden Anspruch, **dadurch gekennzeichnet, dass** sie Längsklemmmittel (45) umfasst, die an dem Zentrierelement (25) über ein zweites Ende (30) desselben gegenüber seinem ersten Ende (26') befestigt sind, wobei die Klemmmittel axiale Stifte aufweisen, die angepasst sind, die Schlitze (39) des Führungsrohrs (36) zu durchqueren und mit der Nut (44) der Wellenführung (40) zusammenzuwirken, um auf diese eine Kraft entlang der zentralen Achse (X') auszuüben.

8. Vorrichtung nach dem vorstehenden Anspruch, **dadurch gekennzeichnet, dass** die Klemmmittel von einem vom Zentrierelement (25) abnehmbaren Teil getragen werden.

9. Vorrichtung nach einem der vorstehenden Ansprüche, umfassend ein Element (55), das so konfiguriert ist, dass es an dem Zentrierelement (25) befestigt werden kann, oder ein Klemmelement (45), das an dem Zentrierelement (25) und einem Gehäuseelement (13) des ersten Moduls (5) befestigt ist, um eine Drehung der Vorrichtung um die Längsachse (X) zu verhindern.

10. Verfahren zum Zusammenbau einer Turbomaschine unter Verwendung einer Vorrichtung nach einem der vorstehenden Ansprüche, wobei die Turbomaschine mindestens ein erstes Modul (3) mit einem Längshohlraum (20), der nach vorne in eine Hohlnabe (21) mündet und das erste Modul (5) entlang einer Längsachse (X) der Hohlnabe (21) bis zu einem hinteren Ende durchläuft, und mindestens ein zweites Modul (3) mit einer Welle (5) umfasst, wobei die Welle (5) in den Längshohlraum (20) über das hintere Ende in eine Montageposition eingesetzt werden soll, wobei das Verfahren einen Schritt des Einbaus des Zentrierelements (25) in die Hohlnabe (21) umfasst, wobei sich das Führungsrohr (36) in der ersten Position oder in Abwesenheit des Zentrierelements (25) befindet, **dadurch gekennzeichnet, dass** es die folgenden Schritte umfasst:
- Gleitenlassen des Führungsrohrs (36) durch das Zentrierelement (25) bis zur hinteren Position;
- Andocken des zweiten Moduls (3) bis zu einer Position, in der ein freies Ende der Welle (4) oder eine an der Welle (4) befestigte Wellenführung (40) in das hintere Ende (37) des Führungsrohrs (36) eintritt, so dass das Führungsrohr (36) die Welle entlang der Längsachse (X) der Hohlnabe (21) führt;
- Längsverschieben des zweiten Moduls (3) mit einer Vorwärtsbewegung der durch das Führungsrohr (36) auf die Längsachse (X) der Hohlnabe (21) zentrierten Welle (4) bis in die Montageposition.

## Claims

1. Device for assembling a turbine engine, intended to centre a shaft (4) of a second module (3) relative to a longitudinal axis (X) of a hollow central hub (21) placed at the front of a first module (5), front and rear being defined relative to the general direction of flow of the gases in the turbine engine, said first module (5) comprises a longitudinal cavity (20) following said axis (X), opening at the front in said hollow hub (21) and passing through the first module (5) following the longitudinal axis (X) to a rear end, said shaft (4) needing to be inserted in said longitudinal cavity (20) through said rear end, comprising a centring element (25) of central axis (X'), comprising ends and configured to be placed in said hollow hub (21) by inserting it through a first of the ends (26') thereof and cooperate with the latter to make the central axis (X') thereof coincide with said longitudinal axis (X), the device further comprising a guiding tube (36) configured to be able to enter into at least one portion of the longitudinal cavity (20) of the first module (5), at the rear of the hollow hub (21), and **characterised in that** the device is arranged so that the guiding tube (36) slides inside the centring element (25) along said central axis (X'), between a first position, wherein the guiding tube (36) is entirely on the side of the centring element (25) relative to said first end (26'), and a rear position, wherein the guiding tube (36) stands proud from said first end (26'), so as to penetrate into the longitudinal cavity (20) when the centring element (25) is placed in the hollow hub (21).

2. Device according to the preceding claim, **characterised in that** a first end (37) of the guiding tube (36) is adapted to go back into the centring element (25) through a second end (30) of the latter, opposite to the first end (26') following the central axis (X'), such that the first position of the guiding tube corresponds to the disconnection thereof from the centring element (25).

3. Device according to one of the preceding claims, wherein said centring element (25) comprises first means (26) intended to engage by contact with the hollow hub (21), located at said first end (26') of the centring element, and second means (27) located in the proximity of an end (30) opposite to the first end (26') about the central axis (X'), and intended to cooperate by locking, for example a bonded connection, with the hollow hub (21).

4. Device according to one of the preceding claims, further comprises a shaft guide (40) arranged to be able to be inserted through a first end (41) in the guiding tube (36) and to be fixed to said shaft (4) of the second module (3) through a second end (42), the device being configured so that the guiding tube (36) cooperates with the shaft guide (40) to maintain the latter on the central axis (X') of the device when the shaft guide (40) is translated forwards, and the sum of the length (Ltg) of the guiding tube (36) and of the length (Lga) of the shaft guide (40) being greater than the extension of the longitudinal cavity (20) of the first module (5).

5. Device according to the preceding claim, configured so that the shaft guide (40) slides inside the guiding tube (36) until an axial abutment (43) of the shaft guide (40) is in contact with said end (37) of the guiding tube (36).

6. Device according to the preceding claim, wherein the shaft guide (40) comprises a recess (44) at a given distance (Lta) of said axial abutment (43) and the guiding tube (36) comprises spaces (39) located substantially at the same distance (Lta) from the first end (37) thereof, so as to give an outer radial access to the recess (44).

7. Device according to the preceding claim, **characterised in that** it comprises longitudinal clamping means (45) fixed to the centring element (25) through a second end (30) of the latter opposite to the first end (26') thereof, said clamping means comprising axial pins adapted to pass through the spaces (39) of the guiding tube (36) and to cooperate with the recess (44) of the shaft guide (40) in order to apply to the latter a force along the central axis (X').

8. Device according to the preceding claim, **characterised in that** the clamping means are supported by a part which can be disconnected from the centring element (25).

9. Device according to one of the preceding claims, comprising an element (55) configured to be fixed on the centring element (25) or a clamping element (45) fixed to the centring element (25) and a casing element (13) of the first module (5), so as to prevent the rotation of the device about the longitudinal axis (X).

10. Method for assembling a turbine engine using a device according to one of the preceding claims, the turbine engine comprising at least one first module (3) comprising a longitudinal cavity (20), opening at the front in a hollow hub (21) and passing through the first module (5) following a longitudinal axis (X) of the hollow hub (21) to a rear end, and at least one second module (3) with a shaft (5), said shaft (5) needing to be inserted in said longitudinal cavity (20) through said rear end to an assembly position, the method comprising a step of an installation of the centring element (25) in the hollow hub (21), the guiding tube (36) being in the first position or absent from the centring element (25), **characterised in that** it comprises the steps:
- sliding of the guiding tube (36) through the centring element (25) to the rear position;
- docking of the second module (3) to a position where a free end of the shaft (4) or a shaft guide (40) fixed to the shaft (4) enters into the rear end (37) of the guiding tube (36), such that the guiding tube (36) guides the shaft along the longitudinal axis (X) of the hollow hub (21);
- longitudinal translation of the second module (3) with a progression of the shaft (4) centred on the longitudinal axis (X) of the hollow hub (21) through the guiding tube (36), to the assembly position.
